(19) **Europäisches Patentamt**

**European Patent Office**

**Office européen des brevets**

(11) Numéro de publication : **0 385 849 B1**

(12)

# FASCICULE DE BREVET EUROPEEN

(45) Date de publication du fascicule du brevet :
**02.12.92 Bulletin 92/49**

(51) Int. Cl.⁵ : **B65G 39/12**, B65G 47/26

(21) Numéro de dépôt : **90400536.0**

(22) Date de dépôt : **27.02.90**

(54) **Dispositif à arbre traversant pour convoyeur à rouleaux à friction.**

(30) Priorité : **28.02.89 FR 8902552**

(43) Date de publication de la demande :
**05.09.90 Bulletin 90/36**

(45) Mention de la délivrance du brevet :
**02.12.92 Bulletin 92/49**

(84) Etats contractants désignés :
**BE DE ES GB IT**

(56) Documents cités :
**EP-A- 0 199 045
DE-A- 3 017 942
FR-A- 2 095 286
FR-A- 2 508 422**

(73) Titulaire : **RENAULT AUTOMATION
8/10 avenue Emile Zola
F-92109 Boulogne-Billancourt (FR)**

(72) Inventeur : **Thurier, Yvan
6, rue des Charmes
F-94320 Thiais (FR)**

(74) Mandataire : **Saint Martin, René
Régie Nationale des Usines Renault 8 & 10,
avenue Emile Zola
F-92109 Boulogne Billancourt (FR)**

EP 0 385 849 B1

Jouve, 18, rue Saint-Denis, 75001 PARIS

## Description

La présente invention se rapporte au domaine de la manutention au cours des opérations d'assemblage ou d'usinage. Elle vise plus particulièrement un dispositif à arbre traversant destiné à un convoyeur à rouleaux à friction.

De nombreux convoyeurs à rouleaux exitent sur le marché. Les dispositifs à arbres traversants comportent généralement des arbres montés sur deux roulements à billes. Ces roulements à billes sont soit surmoulés d'une pièce en matière plastique qui s'emboîte dans deux joues en tôle munies d'encoches, soit montés dans deux profilés d'aluminium alésés au diamètre extérieur des roulements

Dans la première solution, les arbres sont facilement démontables, mais les joues en tôle ne permettent pas de monter des accessoires sans usinage ou soudure.

Dans la seconde solution, les arbres ne sont pas facilement démontables.

L'invention a pour but de remédier à ces inconvénients en alliant les avantages des deux solutions précitées : un démontage aisé des arbres et une utilisation de profilés d'aluminium pour les joues.

A cet effet, elle a pour objet un dispositif à arbre traversant du type comprenant un arbre monté sur deux roulements à billes, deux galets à friction, et des moyens d'entraînement de cet arbre disposés à une extrémité de ce dernier. Suivant une particularité essentielle, cet arbre traverse à chacune de ses extrémités, un palier emboîté et claveté dans un profilé d'aluminium, et surmoulé sur un des deux roulements à billes. Cette disposition permet d'atteindre le but précédemment cité. D'autres particularités et avantages ressortiront plus clairement de la description qui suit de trois modes de réalisation préférés, donnés à titre d'exemples non limitatifs, en référence aux dessins annexés dans lesquels :

la figure 1 représente une section d'un convoyeur d'un dispositif à arbre traversant selon une première variante;

la figure 2A représente une vue de face d'un palier utilisé dans toutes les versions de ce dispositif;

la figure 2B représente une vue de profil en coupe axiale de ce palier;

la figure 3 représente une section d'un convoyeur pourvu d'un dispositif à arbre traversant selon une deuxième variante; et

la figure 4 représente une section d'un convoyeur pourvu d'un dispositif à arbre traversant selon une troisième variante.

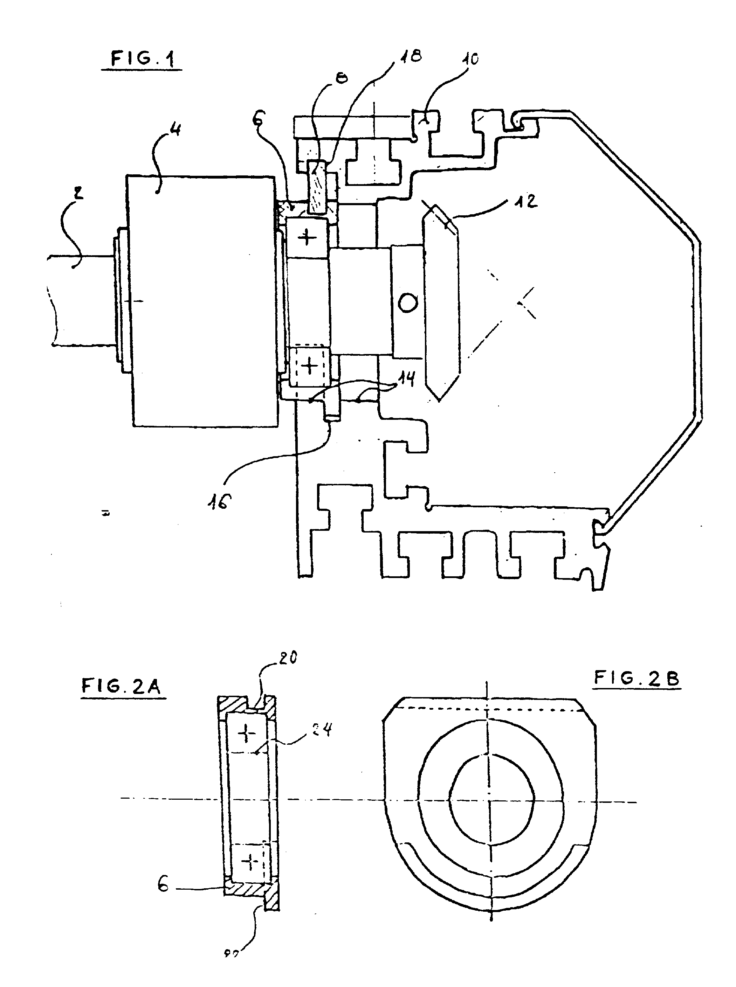

Sur la figure 1 est représentée une section d'un convoyeur conforme à l'invention, du côté moteur.

Un arbre traversant 2 porte un galet à friction 4, un palier 6 et un pignon conique d'entraînement 12.

Le palier 6 est emboîté dans un profilé d'aluminium 10 dans lequel un alésage cylindrique circulaire 14 a été réalisé.

Une rainure 16, obtenue de filage, reçoit le talon 22 du palier 6. Ce palier repose sur la surface de l'alésage 14.

Une clavette 8 assure le verrouillage du palier 6 en prenant appui dans une rainure 18 du profilé 10.

Les figures 2A et 2B illustrent le palier 6 qui est surmoulé sur un roulement 24.

Une rainure 20 vient en vis-à-vis de la rainure 18 pour recevoir la clavette 8 qui assure le verrouillage du palier 6.

Le talon 22 s'emboîte dans la rainure 16 du profilé 10.

L'autre extrémité de l'arbre 2 est monté de la même manière sans le pignon 12 et est libre en translation dans son palier.

Pour démonter l'arbre 2, il suffit de retirer les deux clavettes 8, de translater l'arbre verticalement vers le haut pour amener les paliers 6 en contact avec le profil 10, libérer les galets 4 en translation, glisser les paliers 6 vers le centre du convoyeur puis glisser l'arbre 2 vers la gauche pour extraire le pignon 12 du profilé 10 et enfin basculer l'arbre vers le haut pour l'extraire de l'autre profilé 10.

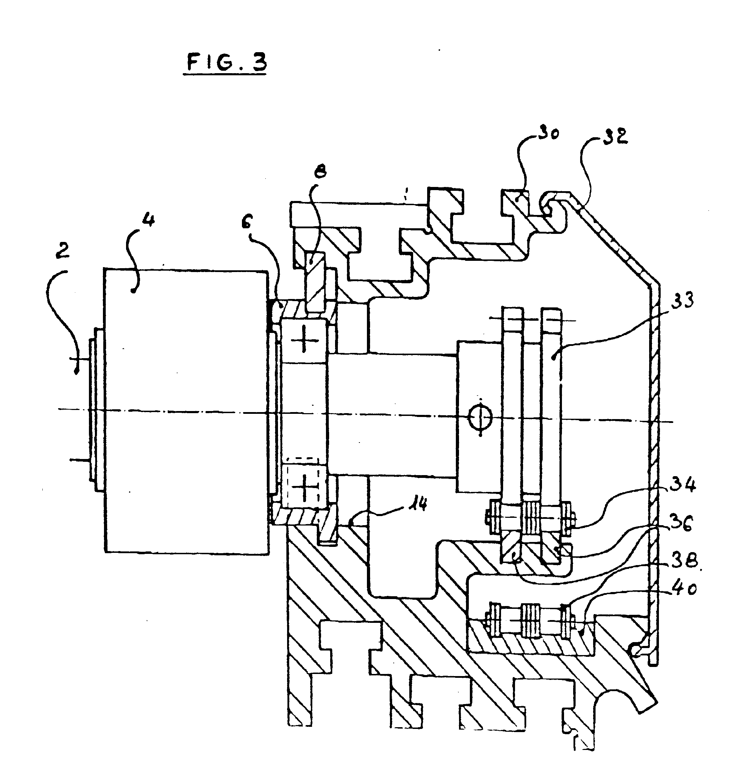

La figure 3 correspond à une autre réalisation où l'entraînement des arbres est obtenu au moyen d'un pignon 33 qui engrène sur une chaîne 34.

La chaîne double 34 repose sur deux étirés acier 36 eux-mêmes maintenus en position par deux rainures ménagées dans le profilé 30.

Le brin de retour 38 de la chaîne 34 repose sur un profilé en polyamide 40 lui-même maintenu en position par une rainure ménagée dans le profilé 30.

Le diamètre extérieur du pignon 33 est inférieur au diamètre de l'alésage 14 dans le profilé 30. Le démontage de l'arbre 2 est ainsi possible comme décrit ci-dessous; de plus, un espace libre est ménagé dans le profilé 30 au-dessus du pignon 33 pour permettre de dégager celui-ci sans avoir à retirer la chaîne 34.

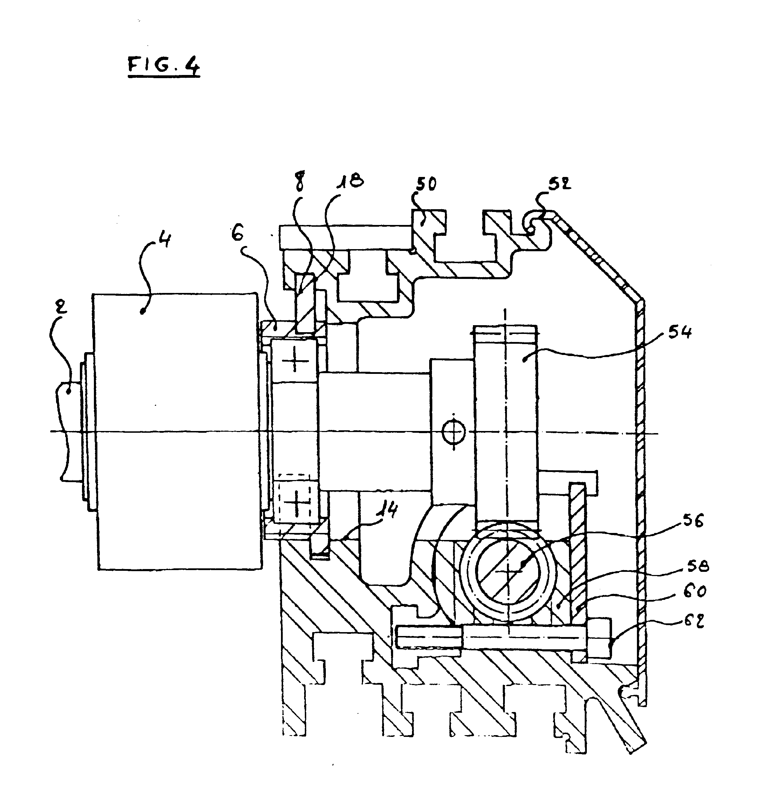

La figure 4 représente une troisième variante où l'entraînement des arbres est obtenu au moyen d'un pignon à denture hélicoïdale 54 qui engrène sur une vis sans fin 56.

Cette vis sans fin 56, modulaire comme les profilés 50 et 52, est commune à plusieurs pignons 54.

Au droit de chaque pignon 54, elle repose sur un palier moulé 58.

Ce palier 58 est immobilisé au moyen d'une vis 62 et d'une plaquette rectangulaire 60.

La composante axiale de la vis 56 est encaissée par une bague d'arrêt solidaire de cette vis qui prend appui sur un palier 58.

Comme pour les autres versions, le diamètre extérieur du pignon 54 est inférieur au diamètre de l'alésage 14 exécuté dans le profilé 50. Cette disposition conserve la démontabilité de l'arbre 2 sans avoir à dégoupiller le pignon 54.

La vis sans fin 56 est entraînée en rotation par une courroie crantée qui engrène sur une poulie solidaire de cette vis. Le rayon extérieur d'enroulement de la courroie est inférieur au rayon extérieur du palier 58. Ainsi, l'entraînement est possible n'importe où, entre deux paliers 58, sans nécessiter d'usinage du profilé 50.

## Revendications

1. Dispositif à arbre traversant pour convoyeur à rouleaux à friction, du type comprenant un arbre (2) monté sur deux roulements à billes (24), deux galets à friction (4) montés sur cet arbre, et des moyens d'entraînement de cet arbre prévus à une extrémité de ce dernier, caractérisé en ce que cet arbre (2) traverse, à chacune de ses extrémités, un palier (6) emboîté et claveté dans un profilé d'aluminium (10) et surmoulé sur un des deux roulements (24).

2. Dispositif suivant la revendication 1, caractérisé en ce que ce palier (6) repose sur la surface d'un alésage (14) du profilé (10) avec un talon (22) logé dans une rainure (16) de ce profilé.

3. Dispositif suivant la revendication 1 ou 2, caractérisé en ce qu'une clavette (8) est logée dans une rainure (18) du profilé (10) et dans une rainure (20) du palier (6).

4. Dispositif suivant l'une quelconque des revendications 1, 2 et 3, caractérisé en ce que ces moyens d'entraînement sont constitués par un pignon conique (12).

5. Dispositif suivant l'une quelconque des revendications 1, 2 et 3, caractérisé en ce que ces moyens d'entraînement sont constitués par un pignon (33) engrénant avec une chaîne double (34) qui repose sur deux étirés (36) eux-mêmes maintenus en position dans deux rainures ménagées dans un profilé (30), et dont le brin de retour (38) repose sur un profilé (40) également maintenu en position dans une rainure de ce profilé.

6. Dispositif suivant l'une quelconque des revendications 1, 2 et 3, caractérisé en ce que ces moyens d'entraînement sont constitués par un pignon à denture hélicoïdale (54) qui engrène sur une vis sans fin (56).

## Patentansprüche

1. Förderer mit Friktionsrollen, mit einer Welle (2), die in zwei Kugellagern (24) angeordnet ist, wobei zwei Friktionsrollen (4) auf der Welle angeordnet sind, und eine Antriebsanordnung für diese Welle an einem ihrer Enden vorgesehen ist, **dadurch gekennzeichnet,** daß diese Welle (2) mit jedem ihrer Enden ein Wellenlager (6) durchsetzt, das in ein Aluminiumprofil eingesetzt und darin verkeilt ist und eines der beiden Kugellager (24) umgibt.

2. Vorrichtung nach Anspruch 1, **dadurch gekennzeichnet,** daß das Wellenlager (6) sich auf der Innenwand einer Bohrung (14) im Profil (10) abstützt, mit einem Absatz (22), der in einer Nut (16) dieses Profils angeordnet ist.

3. Vorrichtung nach Anspruch 1 oder 2, **dadurch gekennzeichnet,** daß ein Keil (8) in einer Nut (18) des Profils (10) und in einer Nut (20) des Wellenlagers (6) sitzt.

4. Vorrichtung nach einem der Ansprüche 1, 2 und 3, **dadurch gekennzeichnet,** daß die Antriebsanordnung aus einem konischen Ritzel (12) besteht.

5. Vorrichtung nach einem der Ansprüche 1, 2 und 3, **dadurch gekennzeichnet,** daß die Antriebsanordnung aus einem Ritzel (33) besteht, das mit einer doppelten Kette (34) kämmt und sich auf zwei Anschlägen (36) abstützt, die ihrerseits in zwei im Profil (30) vorgesehenen Nuten ruhen und wobei das Unterband (38) sich auf einem Profil (40) abstützt, das ebenfalls in einer Nut dieses Profils ruht.

6. Vorrichtung nach einem der Ansprüche 1, 2 und 3, **dadurch gekennzeichnet,** daß die Antriebsanordnung aus einem Ritzel mit schraubenförmiger Zahnung (54) besteht, das mit einer Endlosschraube (56) kämmt.

## Claims

1. An arrangement with a through shaft for a friction roller conveyor, of the type comprising a shaft (2) mounted on two ball bearing assemblies (24), two friction roller members (4) mounted on said shaft, and means for driving said shaft which are provided at one end thereof, characterised in that, at each of its ends, said shaft (2) passes through a bearing (6) which is engaged and keyed in a shaped aluminium member (10) and cast on to one of the two bearing assemblies (24).

2. An arrangement according to claim 1 characterised in that said bearing (6) rests on the surface of a bore (14) in the shaped member (10) with a lug (22) housed in a groove (16) in the shaped member.

3. An arrangement according to claim 1 or claim 2 characterised in that a key (8) is housed in a groove (18) in the shaped member (10) and in a groove (20) in the bearing (6).

4. An arrangement according to any one of claims 1, 2 and 3 characterised in that said drive means comprise a bevel gear (12).

5. An arrangement according to any one of claims 1, 2 and 3 characterised in that the drive means comprise a gear (33) meshing with a double chain (34) which rests on two drawn bars (36) which are themselves held in position in two grooves provided in a shaped member (38), the return run (38) of the chain resting on a shaped member (40) which is also held in position in a groove in said shaped member.

6. An arrangement according to any one of claims 1, 2 and 3 characterised in that said drive means comprise a gear (54) with helical teeth, which meshes with an endless worm (56).

FIG. 1

FIG. 2A

FIG. 2B

# FIG. 3

FIG.4